# FASCICULE DE BREVET EUROPEEN

(11) **EP 1 973 779 B1**
(45) Date de publication et mention de la délivrance du brevet: **22.07.2015**
(21) Numéro de dépôt: 07718315.0
(22) Date de dépôt: 18.01.2007
(51) Int. Cl.: B64D 13/08, F02K 3/06, F02K 3/075, F02K 3/115, F02C 7/141

(54) **TURBOMOTEUR À DOUBLE FLUX POURVU D'UN PRÉREFROIDISSEUR**
MIT EINEM VORKÜHLER AUSGESTATTETER DOPPELFLUSSTURBINENMOTOR
DUAL FLOW TURBINE ENGINE EQUIPPED WITH A PRECOOLER

(30) Priorité: 19.01.2006 FR 0600473
(43) Date de publication de la demande: 01.10.2008
(73) Titulaire: AIRBUS OPERATIONS (SAS), 31060 Toulouse (FR)
(72) Inventeur: PORTE, Alain, F-31770 Colomiers (FR); PRAT, Damien, F-31770 Colomiers (FR)
(74) Mandataire: Bonnetat, Christian
(86) Numéro de dépôt international: PCT/FR2007/000091
(87) Numéro de publication internationale: WO 2007/083027

(56) Documents cités:
- EP-A1- 0 743 435
- FR-A- 2 400 618
- GB-A- 2 272 025
- GB-A- 2 277 781
- US-A- 4 493 184
- US-A- 5 127 222

## Description

La présente invention concerne un turbomoteur à double flux pourvu d'un prérefroidisseur.

On sait que, à bord d'un aéronef, il est nécessaire d'avoir à disposition de l'air chaud afin de pouvoir réaliser certaines fonctions, telles que le conditionnement d'air de la cabine de pilotage et de la cabine des passagers ou le dégivrage de certains organes de l'aéronef.

On sait de plus que cet air chaud provient des turbomoteurs de l'aéronef et doit subir un refroidissement important avant utilisation. Pour ce faire, on prévoit un échangeur de chaleur, généralement appelé prérefroidisseur (precooler en anglais aéronautique), dans lequel de l'air chaud prélevé sur le générateur central du turboréacteur est refroidi par de l'air froid prélevé dans le canal de soufflante, c'est-à-dire sur le flux froid du turbomoteur. Un tel prérefroidisseur est généralement logé dans ledit canal de soufflante, ce qui engendre des perturbations aérodynamiques dans ledit flux froid du turbomoteur.

Par ailleurs, l'air froid prélevé sur le flux froid du turbomoteur et servant à refroidir l'air chaud prélevé sur le générateur central donne naissance à un courant d'air froid réchauffé, qui doit être rejeté à l'extérieur, du turbomoteur, ce qui augmente la traînée de l'aéronef.

Un Turbomoteur à double flux selon l'art antérieur est connu dans FR 2400618.

La présente invention a pour objet de remédier à ces inconvénients de la technique antérieure.

A cette fin, selon l'invention, le turbomoteur à double flux pour aéronef, comportant :
- une nacelle creuse à axe longitudinal pourvue, à l'avant, d'une entrée d'air et, à l'arrière, d'une sortie d'air ;
- un générateur de flux chaud central, disposé axialement dans ladite nacelle ;
- une soufflante disposée axialement dans ladite nacelle, en avant dudit générateur central, et apte à engendrer le flux froid pour ledit turbomoteur ;
- un carénage externe porté intérieurement par ladite nacelle et un carénage interne entourant ledit générateur central, lesdits carénages externe et interne délimitant entre eux un canal de soufflante à section annulaire pour ledit flux froid et ledit carénage interne délimitant avec ledit générateur central une chambre intermédiaire à section annulaire entourant ledit générateur central et pourvue d'au moins un orifice arrière à la périphérie dudit flux chaud ; et
- un prérefroidisseur comportant une entrée pour un courant d'air chaud prélevé sur ledit générateur central et une sortie pour un courant d'air chaud refroidi engendré à l'aide dudit flux froid,
est remarquable :
- en ce que ledit prérefroidisseur est disposé à l'intérieur de ladite chambre intermédiaire en contact thermique avec la partie arrière du carénage interne et en ménageant un passage intermédiaire entre ledit prérefroidisseur et ledit générateur central ; et
- en ce que, en avant dudit prérefroidisseur, est prévue au moins une prise d'air, traversant ledit carénage interne et prélevant, sur ledit flux froid, un courant d'air de refroidissement apte à refroidir au moins en partie ledit courant d'air chaud entrant dans ledit prérefroidisseur.

Ainsi, grâce à la présente invention, on évite les perturbations aérodynamiques dans le canal de soufflante dues au prérefroidisseur, puisque celui-ci est maintenant logé dans la partie arrière dudit carénage interne. De plus, on évite les inconvénients dus au rejet d'air froid réchauffé, puisque ledit prérefroidisseur utilise, du côté externe, le flux froid qui sort du canal de soufflante et qui souffle ladite partie arrière du carénage interne et, du côté interne, ledit courant d'air de refroidissement prélevé sur ledit flux froid par ladite prise d'air, traversant ledit passage intermédiaire depuis ladite prise d'air jusqu'audit orifice arrière, et rejeté à travers ledit orifice arrière de la chambre intermédiaire.

De préférence, ladite prise d'air est équipée d'un dispositif d'obturation commandable. Ainsi, lorsque les conditions de vol sont telles que la température désirée pour ledit courant d'air chaud refroidi peut être obtenue à l'aide du seul flux froid agissant du côté externe du prérefroidisseur, on ferme ladite prise d'air, de sorte qu'alors on ne prélève aucun courant d'air de refroidissement sur ledit flux froid.

On pourrait prévoir une pluralité de prises d'air réparties à la périphérie du carénage interne. Cependant, de préférence, on utilise une unique prise d'air, à laquelle on associe des moyens pour mettre ledit courant d'air de refroidissement en rotation à l'intérieur de ladite chambre intermédiaire, autour dudit axe longitudinal.

De préférence, afin d'obtenir des surfaces d'échange thermique satisfaisantes entre l'air chaud circulant dans ledit prérefroidisseur, le flux froid soufflant celui-ci extérieurement et le courant d'air de refroidissement passant dans le passage intermédiaire, on prévoit que ledit prérefroidisseur et ledit passage intermédiaire présentent une forme à section annulaire et s'étendent sur toute la périphérie interne de ladite partie arrière du carénage interne, autour dudit axe longitudinal.

Dans une forme de réalisation préférée de la présente invention, ledit carénage interne est, au moins dans sa partie arrière, à double paroi, c'est-à-dire qu'il comporte une paroi interne et une paroi externe séparées l'une de l'autre par un espace en forme de lame annulaire, et ledit prérefroidisseur est agencé dans ledit espace.

A cet effet, ledit prérefroidisseur peut comporter :
- une manche de distribution, reliée à ladite entrée du courant d'air chaud et apte à distribuer ledit air chaud sur au moins approximativement la totalité de la longueur (parallèlement à l'axe longitudinal de la nacelle) dudit espace annulaire ; et
- une manche de collecte, reliée à ladite sortie du courant d'air chaud refroidi et apte à collecter ledit air chaud refroidi sur au moins approximativement la totalité de la longueur dudit espace annulaire.

De préférence, entre ladite manche de distribution et ladite manche de collecte (qui sont disposées à la périphérie interne de la partie arrière du carénage interne de façon optimale pour le refroidissement de l'air chaud), ledit prérefroidisseur comporte une pluralité de canaux courbes pour le guidage de l'air chaud, lesdits canaux étant transversaux à l'axe longitudinal de la nacelle et répartis sur la longueur dudit espace annulaire.

De tels canaux peuvent être avantageusement formés par une armature de renfort du carénage interne, solidaire desdites parois interne et externe de ce dernier.

Avantageusement, afin de permettre une régulation encore plus fine et plus aisée de la température de l'air chaud refroidi, on prévoit une conduite, de préférence pourvue d'une vanne commandable, montée en parallèle sur ledit prérefroidisseur et reliant son entrée d'air chaud et sa sortie d'air chaud refroidi.
Les figures du dessin annexé feront bien comprendre comment l'invention peut être réalisée. Sur ces figures, des références identiques désignent des éléments semblables.
La figure 1 illustre, en coupe axiale schématique, un turbomoteur à double flux connu.
Les figures 2 et 3 illustrent, en vues semblables à la figure 1, deux variantes de réalisation du turbomoteur conforme à la présente invention.
La figure 4 montre, en perspective partielle, la prise d'air froid sur le canal de soufflante.
La figure 5 illustre, en demi-coupe longitudinale schématique, le carénage interne entourant le flux chaud des moteurs des figures 2 et 3.
Les figures 6 et 7 illustrent, à plus grande échelle, la structure du carénage de la figure 5.
- La figure 8 est une vue extérieure en perspective de l'arrière dudit carénage interne.
La figure 9 est une vue extérieure de l'avant dudit carénage interne.
Les figures 10 et 11 sont des coupes transversales partielles, respectivement selon les lignes X-X et XI-XI de la figure 8.

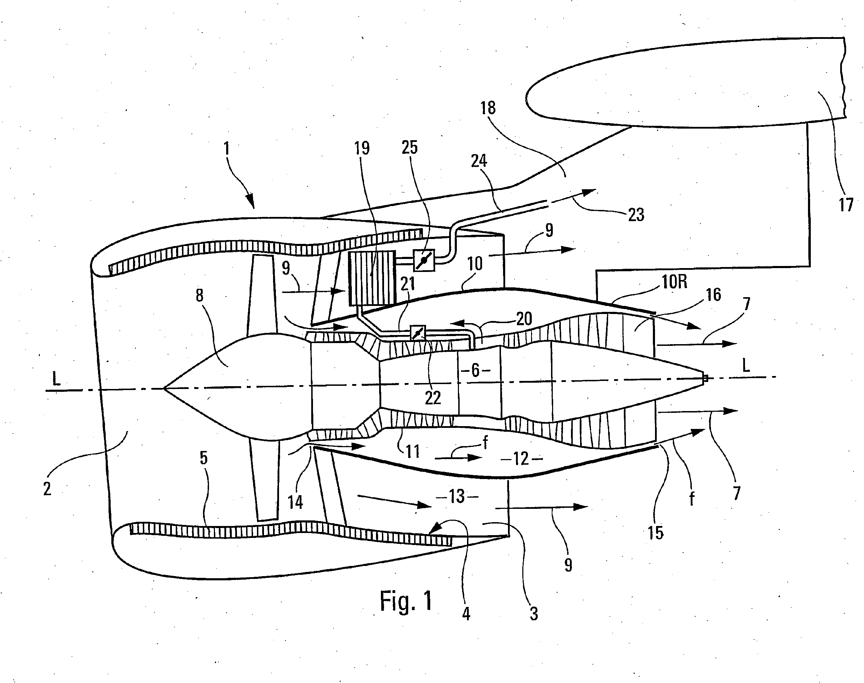

Le turbomoteur à double flux, montré par chacune des figures 1, 2 et 3, comporte une nacelle creuse 1 d'axe longitudinal L-L pourvue, à l'avant, d'une entrée d'air 2 et, à l'arrière, d'une sortie d'air 3. Ladite nacelle creuse 1 porte intérieurement un carénage 4, de préférence revêtu au moins en partie de revêtements d'atténuation acoustique 5, destinés à atténuer les bruits internes dudit turbomoteur.

A l'intérieur de la nacelle creuse 1, sont disposés :
- un générateur de flux chaud central 6, comprenant de façon connue des compresseurs à basse et haute pression, une chambre de combustion et des turbines à basse et haute pression, et engendrant le flux chaud axial 7 dudit turbomoteur ;
- une soufflante 8 disposée axialement en avant dudit générateur central 6 et engendrant le flux froid 9 annulaire dudit turbomoteur ; et
- un carénage interne 10 entourant ledit générateur central 6 en ménageant avec le carter 11 de celui-ci une chambre intermédiaire 12 à section annulaire entourant ledit générateur, la partie arrière 10R dudit carénage formant la paroi externe de la tuyère 16 dudit flux chaud 7.

Le carénage interne 10 et le carénage 4, qui lui est externe, forment entre eux un canal de soufflante 13 à section annulaire entourant le générateur central 6 et à travers lequel s'écoule le flux froid 9.

Entre le carénage interne 10 et le générateur central 6 sont formées, à l'avant, une fente annulaire d'admission d'air 14 et, à l'arrière, une fente annulaire d'évacuation d'air 15. Ainsi, la chambre intermédiaire 12 peut être parcourue par un courant de ventilation f, prélevé sur le flux froid 9 au niveau de la fente avant 14 et rejeté à la frontière entre ledit flux chaud 7 et ledit flux froid 9, au niveau de la fente arrière 15, ce courant de ventilation f permettant de réguler le générateur central 6 en température.

Par ailleurs, de façon usuelle, la nacelle 1 est supportée par une aile 17 de l'aéronef (partiellement représentée) par l'intermédiaire d'un mât de suspension 18.

Dans le turbomoteur connu, illustré sur la figure 1, on prévoit un prérefroidisseur 19, disposé dans la partie supérieure du canal de soufflante 13 dans le flux froid 9. Ce prérefroidisseur 19 est alimenté par un courant d'air chaud 20, à partir du générateur central 6, par l'intermédiaire d'une conduite 21 sur laquelle est prévue une vanne de régulation d'air chaud 22. L'air chaud refroidi 23 engendré par le prérefroidisseur 19 est adressé aux équipements utilisateurs (non représentés) par une conduite 24 qui passe dans le mât de suspension 18 et qui peut être pourvue d'une vanne de régulation 25.

Ainsi, dans cette disposition connue, une partie du flux froid est prélevée par le prérefroidisseur 19 pour refroidir le courant d'air chaud 20 et engendrer le courant d'air chaud refroidi 23 et il en résulte de plus la formation, par ledit prérefroidisseur, d'un courant d'air froid réchauffé (non représenté) correspondant à ladite partie du flux froid prélevée. Ce courant d'air froid réchauffé est rejeté à l'extérieur, de toute manière connue non représentée sur la figure 1, et est généralement la cause d'une augmentation de traînée.

On comprend donc aisément que la présence du prérefroidisseur 19 dans le canal de soufflante 13 et le rejet d'air froid réchauffé sont préjudiciables aux performances du moteur connu illustré par la figure 1.

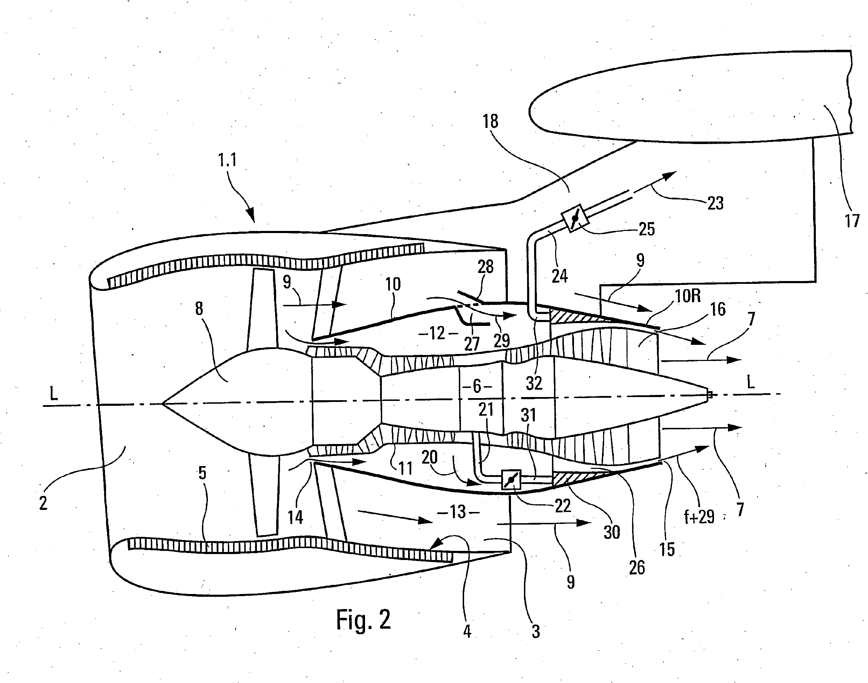

Dans la nacelle 1.1, conforme à la présente invention et représentée sur la figure 2, on retrouve la totalité des éléments 2 à 18 et 20 à 25 décrits en regard de la figure 1.

Cependant, dans cette nacelle 1.1, on a remplacé le prérefroidisseur 19 par un prérefroidisseur 30 disposé à l'intérieur de la chambre intermédiaire 12 en contact thermique avec la partie arrière 10R du carénage 10. Le prérefroidisseur 30 présente une forme à section annulaire autour de l'axe L-L et s'étend sur toute la périphérie de cette partie arrière 10R. De plus, le prérefroidisseur 30 ménage un passage intermédiaire 26, à section annulaire autour de l'axe L-L, entre lui-même et le générateur central 6, ledit passage intermédiaire 26 débouchant à l'arrière par ladite fente annulaire d'évacuation d'air 15.

Par ailleurs, dans la nacelle 1.1 de la figure 2, on a prévu, en avant du prérefroidisseur 30, une prise d'air 27, pourvue de moyens d'obturation 28 et traversant ledit carénage 10. Lorsqu'elle est ouverte, la prise d'air 27 est apte à prélever un courant d'air de refroidissement 29 sur ledit flux froid 9.

Ainsi, du côté externe, le prérefroidisseur 30 est refroidi par le flux froid 9 sortant du canal de soufflante 13 et léchant la partie arrière 10R du carénage interne 10, alors que, du côté interne, lorsque la prise d'air 27 est ouverte, il est de plus refroidi par ledit courant d'air de refroidissement 29, traversant le passage intermédiaire 26 et sortant par la fente 15.

Le prérefroidisseur 30 comporte une entrée 31, reliée à la conduite 21 d'amenée du courant d'air chaud 20, et une sortie 32, reliée à la conduite 24 véhiculant l'air chaud refroidi 23.

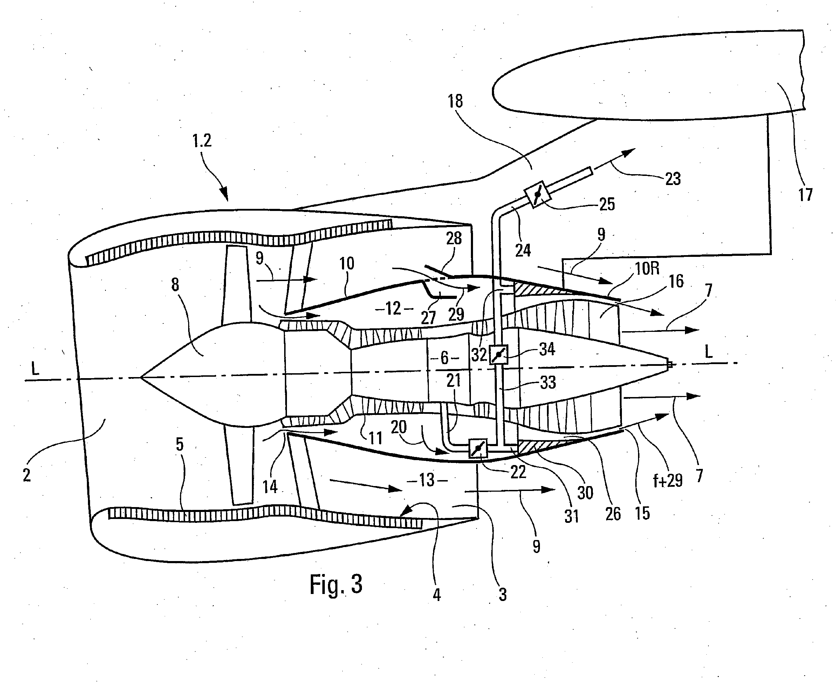

Sur la figure 3, qui montre tous les éléments de la figure 2, on a de plus prévu, dans la nacelle 1.2 conforme à l'invention, une conduite de dérivation 33, montée en parallèle sur le prérefroidisseur 30 en reliant l'entrée 31 et la sortie 32 et pourvue d'une vanne 34. De cette façon, éventuellement, on peut faire passer de l'air chaud directement de l'entrée 31 à la sortie 32 en court-circuitant le prérefroidisseur 30.

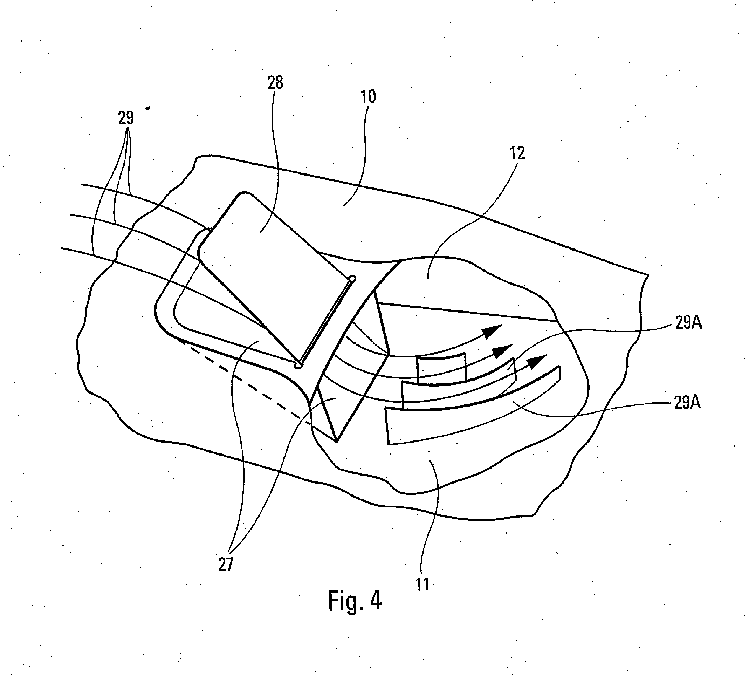

Sur la figure 4, on a représenté un mode de réalisation de la prise d'air 27, avec son obturateur 28 (mais sans les moyens d'actionnement de ce dernier). Dans la chambre 12, sur le carter 11 du générateur 6, sont disposées des ailettes 29A pour mettre le courant d'air de refroidissement 29 en rotation autour de l'axe L-L.

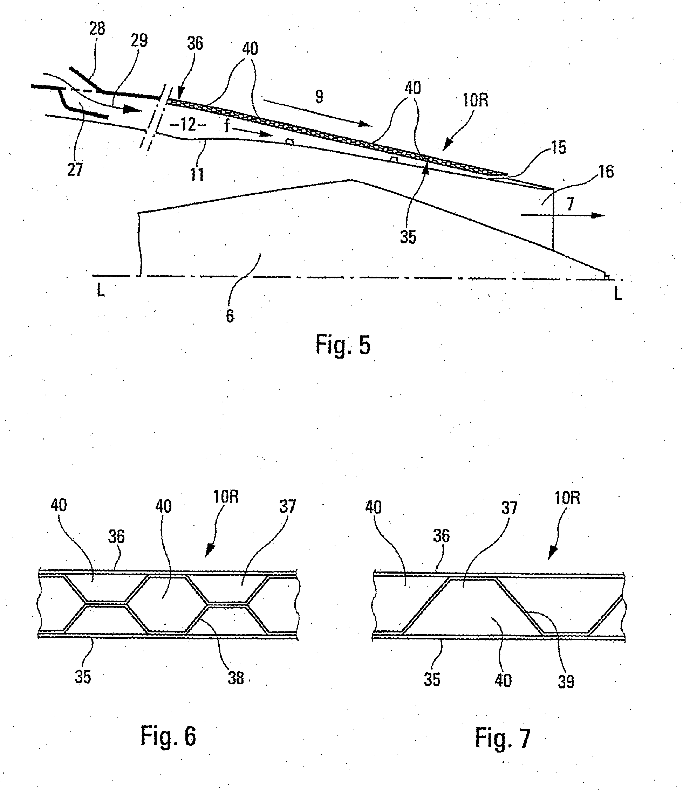

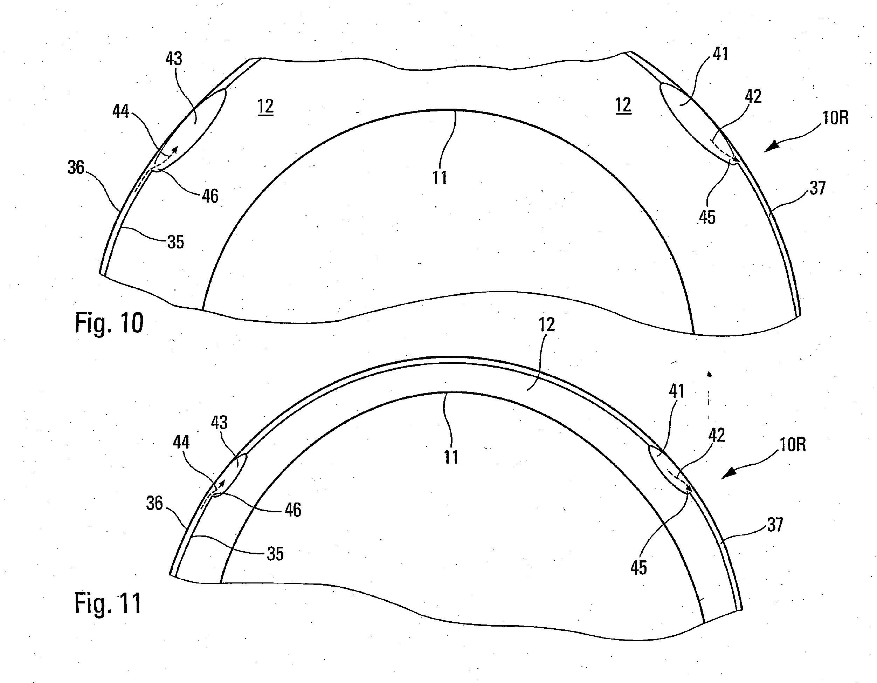

L'exemple de réalisation du prérefroidisseur 30, illustré par les figures 5 à 11, est structurellement incorporé à ladite partie arrière 10R du carénage interne 10.

Comme on peut le voir sur les figures 5 à 7, ladite partie arrière 10R comporte une paroi interne 35 et une paroi externe 36, parallèles et écartées l'une de l'autre d'un espace 37 en forme de lame annulaire. Dans cet espace est disposée une armature 38 (figure 6) ou 39 (figure 7), solidaire desdites parois interne et externe 35 et 36 et délimitant des canaux courbes 40 subdivisant l'espace 37. Les canaux 40 sont transversaux à l'axe L-L de la nacelle et sont répartis le long de ladite partie arrière 10R.

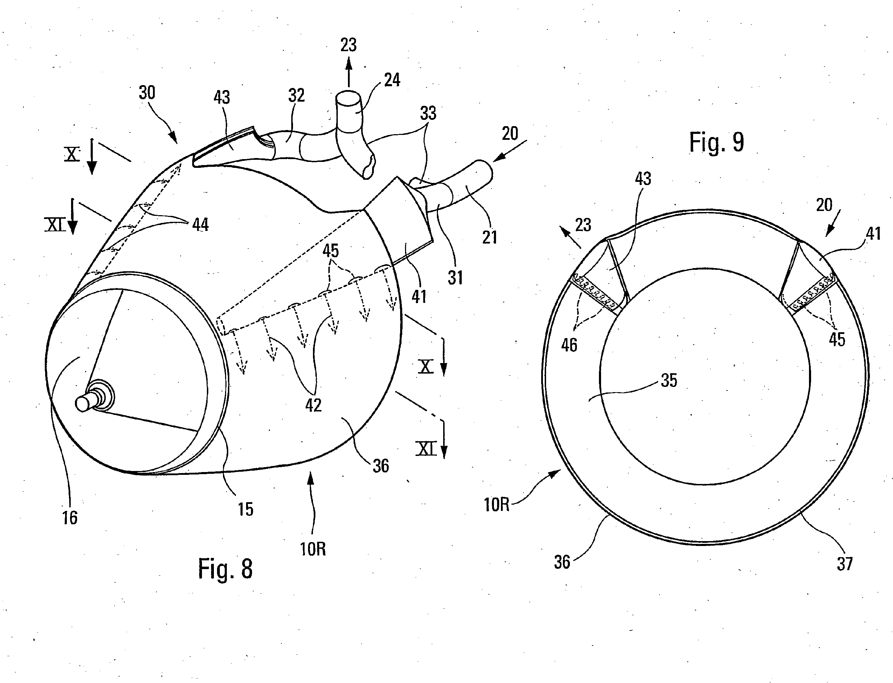

Par ailleurs, ledit prérefroidisseur 30 comporte (voir la figure 8) :
- une manche de distribution 41, reliée à l'entrée d'air chaud 31 et apte à distribuer ledit air chaud (voir les flèches 42) à l'intérieur dudit espace 37 (et donc dans les canaux 40) tout le long de ladite partie arrière 10R et transversalement à celle-ci et
- une manche de collecte 43, reliée à la sortie d'air chaud refroidi 32 et apte à collecter ledit air (voir les flèches 44) traversant ledit espace 37 à travers les canaux 40, tout le long de ladite partie arrière 10R.

Comme illustré sur les figures 8 à 11, la section des manches 41 et 43 diminue de l'avant vers l'arrière, alors que c'est le contraire pour les orifices de distribution 45 et les orifices de collecte 46 dont elles sont respectivement pourvues.

## Revendications

1. Turbomoteur à double flux pour aéronef, comportant :
- une nacelle creuse (1) à axe longitudinal (L-L) pourvue, à l'avant, d'une entrée d'air (2) et, à l'arrière, d'une sortie d'air (3) ;
- un générateur central (6) de flux chaud (7), disposé axialement dans ladite nacelle (1) ;
- une soufflante (8) disposée axialement dans ladite nacelle (1), en avant dudit générateur central (6), et apte à engendrer le flux froid (9) pour ledit turbomoteur ;
- un carénage externe (4) porté intérieurement par ladite nacelle (1) et un carénage interne (10) entourant ledit générateur central (6), lesdits carénages externe et interne délimitant entre eux un canal de soufflante (13) à section annulaire pour ledit flux froid (9) et ledit carénage interne (10) délimitant avec ledit générateur central (6) une chambre intermédiaire (12) à section annulaire entourant ledit générateur central (6) et pourvue d'au moins un orifice arrière (15) à la périphérie dudit flux chaud (7) ; et
- un prérefroidisseur comportant une entrée pour un courant d'air chaud (20) prélevé sur lendit générateur central (6) et une sortie pour un courant d'air chaud refroidi engendré à l'aide dudit flux froid (9), **caractérisé :**
- **en ce que** ledit prérefroidisseur (30) est disposé à l'intérieur de ladite chambre intermédiaire (12) en contact thermique avec la partie arrière (10R) du carénage interne (10), en ménageant un passage intermédiaire (26) entre ledit prérefroidisseur (30) et ledit générateur central (6) ; et
- **en ce que**, en avant dudit prérefroidisseur (30), est prévue au moins une prise d'air (27), traversant ledit carénage interne (10) et prélevant, sur ledit flux froid (9), un courant d'air de refroidissement (29) apte à refroidir au moins en partie ledit courant d'air chaud (20) entrant dans ledit prérefroidisseur (30).

2. Turbomoteur selon la revendication 1,
**caractérisé en ce que** ladite prise d'air (27) est équipée d'un dispositif d'obturation commandable (28).

3. Turbomoteur selon l'une des revendications 1 ou 2,
**caractérisé en ce que**, à l'intérieur de ladite chambre intermédiaire (12) et en arrière de ladite prise d'air (27) sont prévus des moyens pour mettre ledit courant d'air de refroidissement (29), prélevé sur ledit flux froid (9), en rotation autour dudit axe longitudinal.

4. Turbomoteur selon l'une des revendications 1 à 3,
**caractérisé en ce que** ledit prérefroidisseur (30) et ledit passage intermédiaire (26) présentent une forme à section annulaire et s'étendent sur toute la périphérie de ladite partie arrière (10R) du carénage interne (10), autour dudit axe longitudinal (L-L).

5. Turbomoteur selon l'une des revendications 1 à 4,
**caractérisé en ce que**, au moins dans sa partie arrière (10R), ledit carénage interne (10) comporte une paroi interne (35) et une paroi externe (36), parallèles, séparées l'une de l'autre par un espace (37) en forme de lame annulaire et **en ce que** ledit refroidisseur (30) est agencé dans ledit espace (37).

6. Turbomoteur selon la revendication 5,
**caractérisé en ce qu'**il comporte :
- une manche de distribution (41), reliée à ladite entrée (31) du courant d'air chaud (20) et apte à distribuer ledit air chaud sur au moins approximativement la totalité de la longueur dudit espace annulaire (37) ; et
- une manche de collecte (43), reliée à ladite sortie (32) du courant d'air chaud refroidi (23) et apte à collecter ledit air chaud refroidi sur au moins approximativement la totalité de la longueur dudit espace annulaire (37).

7. Turbomoteur selon la revendication 6,
**caractérisé en ce que**, entre ladite manche de distribution (41) et ladite manche de collecte (43), ledit prérefroidisseur (30) comporte une pluralité de canaux courbes (40) pour le guidage de l'air chaud, lesdits canaux étant transversaux à l'axe longitudinal (L-L) de la nacelle et répartis sur la longueur dudit espace annulaire (37).

8. Turbomoteur selon la revendication 7,
**caractérisé en ce que** lesdits canaux (40) sont formés par une armature (38, 39) renforçant ladite partie arrière (10R) du carénage interne (10) et solidaire desdites parois interne (35) et externe (36).

9. Turbomoteur selon l'une des revendications 1 à 8,
**caractérisé en ce qu'**il comporte une conduite de dérivation (33) montée en parallèle sur ledit prérefroidisseur (30) en reliant ladite entrée (31) du courant de flux chaud (20) et ladite sortie (32) du courant de flux chaud refroidi (23).

10. Turbomoteur selon la revendication 9,
**caractérisé en ce que** ladite conduite de dérivation (33) est pourvue d'une vanne commandable (34).

## Patentansprüche

1. Doppelstrom-Turbomaschine für ein Luftfahrzeug, umfassend:
- eine hohle Gondel (1) mit einer Längsachse (L-L), die vorne mit einem Lufteintritt (2) und hinten mit einem Luftaustritt (3) versehen ist;
- einen zentralen Generator (6) eines heißen Luftstroms (7), der axial in der Gondel (1) angeordnet ist;
- ein Gebläse (8), das axial in der Gondel (1) vorne am zentralen Generator (6) angeordnet und geeignet ist, den kalten Luftstrom (9) für die Turbomaschine zu erzeugen;
- eine äußere Abdeckung (4), die innen von der Gondel (1) getragen wird, und eine innere Abdeckung (10), die den zentralen Generator (6) umgibt, wobei die äußere und innere Abdeckung zwischen sich einen Gebläsekanal (13) mit ringförmigem Querschnitt für den kalten Luftstrom (9) begrenzen, und wobei die innere Abdeckung (10) mit dem zentralen Generator (6) eine Zwischenkammer (12) mit ringförmigem Querschnitt begrenzt, die den zentralen Generator (6) umgibt und mit mindestens einer hinteren Öffnung (15) an der Peripherie des heißen Luftstroms (7) versehen ist; und
- einen Vorkühler, umfassend einen Eingang für einen Heißluftstrom (20), der am zentralen Generator (6) entnommen wird, und einen Ausgang für einen gekühlten Heißluftstrom, der mit Hilfe des kalten Luftstroms (9) erzeugt wird,
**dadurch gekennzeichnet:**
- **dass** der Vorkühler (30) im Inneren der Zwischenkammer (12) in Wärmekontakt mit dem hinteren Teil (10R) der inneren Abdeckung (10) angeordnet ist, wobei ein Zwischendurchgang (26) zwischen dem Vorkühler (30) und dem zentralen Generator (6) ausgenommen ist; und
- **dass** vorne am Vorkühler (30) mindestens ein Lufteinlass (27) vorgesehen ist, der durch die innere Abdeckung (10) hindurchgeht und aus dem kalten Luftstrom (9) einen Kühlluftstrom (29) entnimmt, der geeignet ist, den Heißluftstrom (20), der in den Vorkühler (30) eintritt, zumindest teilweise zu kühlen.

2. Turbomaschine nach Anspruch 1, **dadurch gekennzeichnet, dass** der Lufteinlass (27) mit einer steuerbaren Verschlussvorrichtung (28) ausgestattet ist.

3. Turbomaschine nach einem der Ansprüche 1 oder 2, **dadurch gekennzeichnet, dass** im Inneren der Zwischenkammer (12) und hinten am Lufteinlass (27) Mittel vorgesehen sind, um den Kühlluftstrom (29), der dem kalten Luftstrom (9) entnommen wird, um die Längsachse in Drehung zu versetzen.

4. Turbomaschine nach einem der Ansprüche 1 bis 3, **dadurch gekennzeichnet, dass** der Vorkühler (30) und der Zwischendurchgang (26) eine Form mit ringförmigem Querschnitt aufweisen und sich auf der gesamten Peripherie des hinteren Teils (10R) der inneren Abdeckung (10) um die Längsachse (L-L) erstrecken.

5. Turbomaschine nach einem der Ansprüche 1 bis 4, **dadurch gekennzeichnet, dass** die innere Abdeckung (10) zumindest in ihrem hinteren Teil (1OR) eine Innenwand (35) und eine Außenwand (36) umfasst, die parallel und voneinander durch einen Raum (37) in Form einer ringförmigen Lamelle getrennt sind, und dass der Kühler (30) in dem Raum (37) angeordnet ist.

6. Turbomaschine nach Anspruch 5, **dadurch gekennzeichnet, dass** sie umfasst:
- einen Verteilerstutzen (41), der mit dem Eingang (31) des Heißluftstroms (20) verbunden und geeignet ist, die heiße Luft auf zumindest annähernd der Gesamtheit der Länge des ringförmigen Raums (37) zu verteilen;
- einen Sammelstutzen (43), der mit dem Ausgang (32) des gekühlten heißen Luftstroms (23) verbunden und geeignet ist, die gekühlte heiße Luft auf zumindest annähernd der Gesamtheit der Länge des ringförmigen Raums (37) zu sammeln.

7. Turbomaschine nach Anspruch 6, **dadurch gekennzeichnet, dass** zwischen dem Verteilerstutzen (41) und dem Sammelstutzen (43) der Vorkühler (30) eine Vielzahl von gebogenen Kanälen (40) für die Leitung der heißen Luft umfasst, wobei die Kanäle quer zur Längsachse (L-L) der Gondel und auf der Länge des ringförmigen Raums (37) verteilt sind.

8. Turbomaschine nach Anspruch 7, **dadurch gekennzeichnet, dass** die Kanäle (40) von einem Beschlag (38, 39) gebildet sind, der den hinteren Teil (1OR) der inneren Abdeckung (10) verstärkt und mit der Innen- (35) und Außenwand (36) verbunden ist.

9. Turbomaschine nach einem der Ansprüche 1 bis 8, **dadurch gekennzeichnet, dass** sie eine Abzweigungsleitung (33) umfasst, die parallel auf dem Vorkühler (30) montiert ist, wobei sie den Eingang (31) des Heißluftstroms (20) und den Ausgang (32) des gekühlten Heißluftstroms (23) verbindet.

10. Turbomaschine nach Anspruch 9, **dadurch gekennzeichnet, dass** die Abzweigungsleitung (33) mit einem steuerbaren Ventil (34) versehen ist.

## Claims

1. A bypass turbine engine for an aircraft, comprising:
- a hollow nacelle (1) of longitudinal axis (L-L) provided, at the front, with an air inlet (2) and, at the rear, with an air outlet (3);
- a central hot-stream (7) generator (6), positioned axially in said nacelle (1);
- a fan (8) positioned axially in said nacelle (1) forward of said central generator (6) and able to generate the cold stream (9) for said turbine engine;
- an outer fairing (4) borne internally by said nacelle (1) and an inner fairing (10) surrounding said central generator (6), said outer and inner fairings between them delimiting a fan duct (13) of annular cross section for said cold stream (9) and said inner fairing (10) delimiting with said central generator (6) an intermediate chamber (12) of annular cross section surrounding said central generator (6) and provided with at least one rear orifice (15) at the periphery of said hot stream (7); and
- a precooler comprising an inlet for a current of hot air (20) bled from said central generator (6) and an outlet for a current of cooled hot air generated using said cold stream (9),
**characterized:**
- **in that** said precooler (30) is positioned inside said intermediate chamber (12) in thermal contact with the rear part (10R) of the inner fairing (10), forming an intermediate passage (26) between said precooler (30) and said central generator (6); and
- **in that**, forward of said precooler (30), there is at least one air intake (27) passing through said inner fairing (10) and bleeding from said cold stream (9), a current of cooling air (29) able at least partially to cool said current of hot air (20) entering said precooler (30).

2. The turbine engine as claimed in claim 1, **characterized in that** said air intake (27) is fitted with a controllable shut-off device (28).

3. The turbine engine as claimed in one of claims 1 and 2, **characterized in that**, inside said intermediate chamber (12) and to the rear of said air intake (27) there are means for setting said current of cooling air (29) bled from said cold stream (9), in rotation about said longitudinal axis.

4. The turbine engine as claimed in one of claims 1 to 3, **characterized in that** said precooler (30) and said intermediate passage (26) have a shape of annular cross section and extend over the entire periphery of said rear part (10R) of the inner fairing (10) about said longitudinal axis (L-L).

5. The turbine engine as claimed in one of claims 1 to 4, **characterized in that**, at least in its rear part (10R) said inner fairing (10) comprises an inner wall (35) and an outer wall (36) which are parallel and separated from one another by a space (37) in the form of an annular gap, and **in that** said cooler (30) is positioned in said space (37).

6. The turbine engine as claimed in claim 5, **characterized in that** it comprises:
- a distribution pipe (41), connected to said inlet (31) for the current of hot air (20) and able to distribute said hot air to at least approximately the entire length of said annular space (37); and
- a collection pipe (43) connected to said outlet (32) for the current of cooled hot air (23) and able to collect said cooled hot air over at least approximately the entire length of said annular space (37).

7. The turbine engine as claimed in claim 6, **characterized in that**, between said distribution pipe (41) and said collection pipe (43), said precooler (30) comprises a plurality of curved ducts (40) for guiding the hot air, said ducts being transverse to the longitudinal axis (L-L) of the nacelle and distributed over the length of said annular space (37).

8. The turbine engine as claimed in claim 7, **characterized in that** said ducts (40) are formed by a framework (38, 39) reinforcing said rear part (10R) of the inner fairing (10) and secured to said inner (35) and outer (36) walls.

9. The turbine engine as claimed in one of claims 1 to 8, **characterized in that** it comprises a bypass duct (33) mounted in parallel with said precooler (30) and connecting said inlet (31) for the current of hot stream (20) and said outlet (32) for the current of cooled hot stream (23).

10. The turbine engine as claimed in claim 9, **characterized in that** said bypass duct (33) is equipped with a controllable valve (34).
